# EUROPEAN PATENT SPECIFICATION

(11) **EP 3 238 389 B1**
(45) Date of publication and mention of the grant of the patent: **24.07.2019**
(21) Application number: 16747001.2
(22) Date of filing: 27.01.2016
(51) Int. Cl.: H04L 12/725, G06F 3/02, H04L 12/24, H04L 12/26, H04W 24/02

(54) **PERFORMANCE-BASED OPTIMIZATION OF QOS FACTORS**
LEISTUNGSBASIERTE OPTIMIERUNG VON QOS-FAKTOREN
OPTIMISATION DE FACTEURS DE QOS, BASÉE SUR LA PERFORMANCE

(30) Priority: 03.02.2015 US 201514612962
(43) Date of publication of application: 01.11.2017
(73) Proprietor: T-Mobile USA, Inc., Bellevue, WA 98006-1350 (US)
(72) Inventor: ZHANG, Ting, Bellevue, WA 98006-1350 (US); PANDEY, Sudhanshu, Bellevue, WA 98006-1350 (US); TAPIA, Pablo, Bellevue, WA 98006-1350 (US)
(74) Representative: Hanna Moore + Curley
(86) International application number: PCT/US2016/015184
(87) International publication number: WO 2016/126490

(56) References cited:
- WO-A1-2013/124435
- US-A1- 2008 139 197
- US-A1- 2010 299 419
- US-A1- 2014 086 073
- US-A1- 2014 229 210
- US-A1- 2014 250 201
- US-A1- 2014 250 201
- US-A1- 2014 355 439
- ILYOUNG CHONG HUFS KOREA (REPUBLIC OF): "The output draft Supplement document of Y.son-ngn;TD891 (NGN-GSI)", ITU-T DRAFT ; STUDY PERIOD 2009-2012, INTERNATIONAL TELECOMMUNICATION UNION, GENEVA ; CH, vol. 24/13, 16 February 2012 (2012-02-16), pages 1-32, XP044015029, [retrieved on 2012-02-16]

## Description

### BACKGROUND

The spectrum and backhaul resources of telecommunication networks are limited. As these networks communicate an increasing amount of data, congestion, delay, and failed connections become more common. Voice calls, video calls, and other real-time communications are often dropped, web pages load slowly, and movies must repeatedly pause in order for their buffers to refill. With such demands and limited resources, some priority must be given to certain types of network traffic. To provide such priority, telecommunication networks associate traffic with quality-of-service (QoS) classes. Such classes may refer to specific types of applications or service (e.g., voice calling, network browsing, etc.), different data types, different service categories, etc. Traffic of a higher priority QoS class may receive a better allocation of resources (e.g., frequency blocks, etc.) than traffic of a lower priority QoS class. Further, the QoS classes may be assigned different weights that affect the impact of the priorities. This weighting scheme, however, is static, with weights of QoS classes not changing with circumstances. For example, because of the static weighting scheme, traffic associated with a lower priority QoS class may receive a worse allocation of resources than necessary during a time when network services are not in demand.

US2014355439 describes a system that may be configured to identify a queue scheduler configuration associated with node of a network; and receive queue state information regarding the node. US2014250201 describes techniques for limiting transmission of plurality of messages from one or more self-organizing network (SON) tools to a network support node based at least in part on performance information and on either or both of priorities associated with the plurality of messages or priorities associated with the SON tool(s).

### SUMMARY

Accordingly there is provided a method, a non-transitory computer-readable medium and a system as detailed in the claims that follow.

### BRIEF DESCRIPTION OF THE DRAWINGS

The detailed description is set forth with reference to the accompanying figures. In the figures, the left-most digit(s) of a reference number identifies the figure in which the reference number first appears. The use of the same reference numbers in different figures indicates similar or identical items or features.
FIG. 1 illustrates an example environment including self-organizing network (SON) component(s) and node(s) of a telecommunication network, the SON component(s) receiving performance metrics, network configuration, or network fault information from the node(s), determining QoS factors for QoS classes for the node(s) based on the performance metrics, network configuration, or network fault information, and transmitting indications of the QoS factors to the node(s).
FIG. 2 illustrates a component level view of a computing device configured to implement one or more SON components.
FIG. 3 illustrates a component level view of a node of the telecommunication network.
FIG. 4 illustrates an example process for determining, by SON component(s), QoS factors for QoS classes of a telecommunication network node based on performance metrics, network configuration, or network fault information associated with communication of traffic of the QoS classes.
FIG. 5 illustrates an example process for reporting, by a telecommunication network node, performance metrics, network configuration, or network fault information associated with communication of traffic of the QoS classes, receiving indications of QoS factors for the QoS classes, and updating the QoS factors based on the received indications.

### DETAILED DESCRIPTION

This disclosure describes, in part, one or more SON components configured to determine QoS factors associated with QoS classes for a node of a telecommunication network based at least in part on performance metrics, network configuration, or network fault information. The one or more SON components may receive the performance metrics, network configuration, or network fault information from the node, and the performance metrics, network configuration, or network fault information may be associated with communication of traffic of the QoS classes by the node. Upon determining the QoS factors, the one or more SON components may transmit indications of the QoS factors to the node to enable the node to update its QoS class QoS factors. This reporting of performance metrics, network configuration, or network fault information and determining and updating of QoS factors may be performed repeatedly over time to optimize the QoS factors for the QoS classes at a node under different performance conditions. Such a dynamic scheme allows greater use of network resources during times with lower demand while carefully allocating such resources at times with higher demand.

### Example Environment

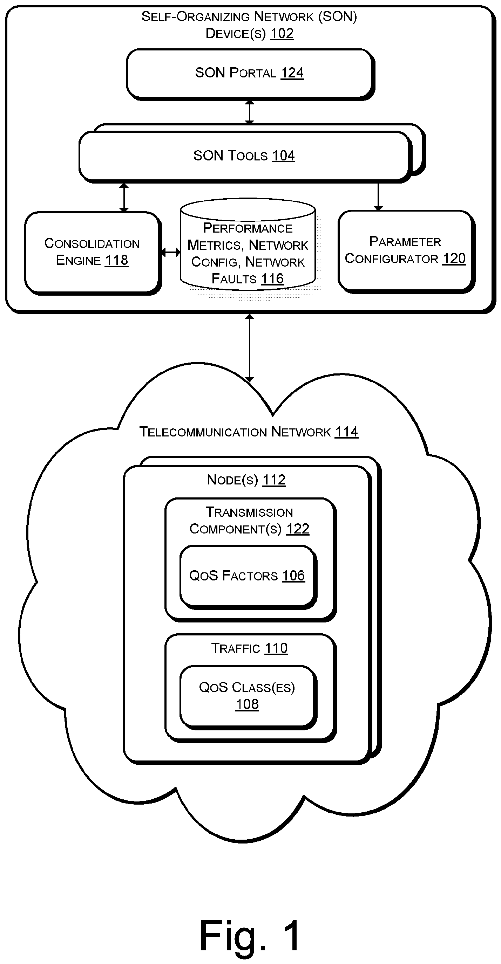

FIG. 1 illustrates an example environment including SON component(s) and node(s) of a telecommunication network, the SON component(s) receiving performance metrics, network configuration, or network fault information from the node(s), determining QoS factors for QoS classes for the node(s) based on the performance metrics, network configuration, or network fault information, and transmitting indications of the QoS factors to the node(s). As illustrated, one or more computing devices 102 configured with one or more SON components (referred to hereinafter as "SON device(s) 102") may include, among the SON component(s), one or more SON tools 104 configured to determine QoS factors 106 for QoS classes 108 associated with traffic 110 communicated by one or more nodes 112 of a telecommunication network 114. The SON component(s) of the SON device(s) 102 may also include a performance metrics, network configuration, or network fault information store 116 which receives and stores performance metrics, network configuration, or network fault information reported by the node(s) 112, a consolidation engine 118 to gather and utilize the performance metrics, network configuration, or network fault information, and a parameter configurator 120 to provide indications of the determined QoS factors to the node(s) 112. Transmission component(s) 122 of the node(s) 112 may update the QoS factors 106 based on the received indications and utilize the updated QoS factors 106 and QoS classes 108 in allocating network resources to different parts of traffic 110. Additionally, the SON component(s) of the SON device(s) 102 may include a SON portal 124 to enable configuration of the SON tools(s) 104.

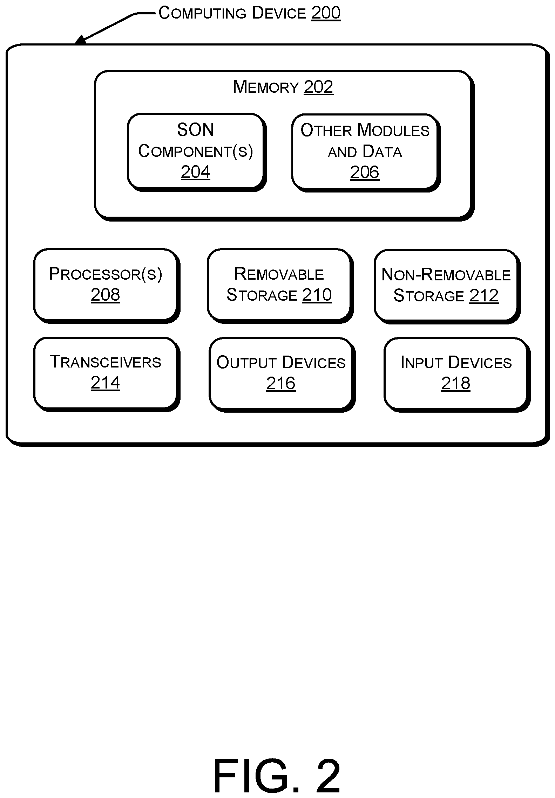

In various implementations, the SON device(s) 102 may each be or include a server or server farm, multiple, distributed server farms, a mainframe, a work station, a personal computer (PC), a laptop computer, a tablet computer, an embedded system, or any other sort of device or devices. In one implementation, the SON device(s) 102 represent a plurality of computing devices working in communication, such as a cloud computing network of nodes. The SON device(s) 102 may belong to the telecommunication network 114 or may be external to but in communication with the telecommunication network 114. An example SON device 102 is illustrated in FIG. 2 and is described in detail below with reference to that figure.

The telecommunication network 114 may be any sort of telecommunication network of a telecommunication service provider and may include a core network and any one or more packet-switched access network(s), circuit-switched access network(s), or both. The access network(s) of the telecommunication network 114 may utilize 2G, 3G, 4G, 5G, Global System for Mobile Communications (GSM), Universal Mobile Telecommunication System (UMTS), High Speed Packet Access (HSPA), Evolved High Speed Packet Access (HSPA+), Long Term Evolution (LTE), WiFi, or WiMax technologies.

The telecommunication network 114 may be comprised of node(s) 112, including any or all of access network nodes 112, backhaul nodes 112, or core network nodes 112. The access network nodes 112 may include base stations, node Bs, eNode Bs, or radio network controllers (RNCs). The backhaul nodes 112 may be routers or gateways with Ethernet lines connected to other backhaul nodes 112, to access network nodes 112, to core network nodes 112, etc. Core network nodes 112 may be any nodes 112 of the telecommunication network 114 in a transmission path between two communicating end-points, one or both of which may be a mobile device receiving telecommunication services through an access network node 112.

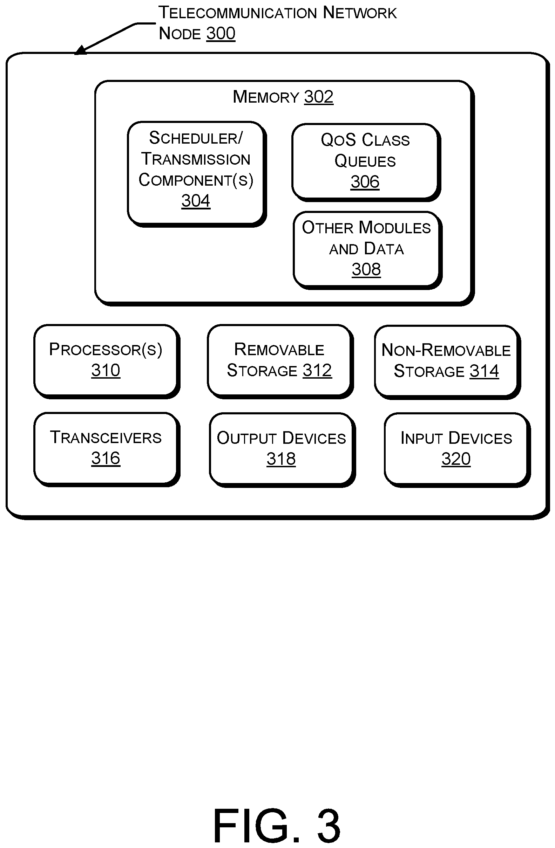

In various implementations, the node(s) 112 may each be or include a server or server farm, multiple, distributed server farms, a mainframe, a work station, a PC, a laptop computer, a tablet computer, an embedded system, or any other sort of device or devices. An example node 112 is illustrated in FIG. 3 and is described in detail below with reference to that figure.

As shown, the node(s) 112 may also include transmission component(s) 122. The transmission component(s) 122 may include any software components, hardware components, or both for monitoring and managing network resources of their respective node(s) 112 (e.g., cellular resources, backhaul resources, transport resources, core network resources, etc.). For example, an access network node 112 may be equipped with radios for sending and receiving traffic 110 over different bands of frequency spectrum, and the transmission component(s) 122 of such an access network node 112 may include a scheduler for allocating blocks of frequency bands to different mobile devices. The allocation by the scheduler may be based on the QoS class 108 associated with the traffic 110 with each mobile device. The QoS class 108 may be determined based on an application or service associated with the traffic 110 (e.g., voice calling, network browsing, etc.), based on different service categories (e.g., a brand associated with a service contract of a user of a mobile device), or based on a data type of the traffic 110. The scheduler may determine the application, data type, or service category associated with traffic 110 with each mobile device, associate QoS classes 108 with the traffic 110 based on those determinations, and utilize the QoS classes in determining which network resources to allocate to which mobile devices. The scheduler or other transmission component(s) 122 of the access network node 112 may also monitor performance metrics, network configuration, or network fault information and report those performance metrics, network configuration, or network fault information to the SON device(s) 102.

The transmission component(s) 122 of the backhaul nodes 112 and core network nodes 112 may determine the QoS class 108 to associate with traffic on a per-data-connection/service-flow basis rather than on a per-user basis. For a given data connection/service flow, such as a voice call connection, the transmission component(s) 122 of the backhaul node 112 or core network node 112 transmitting the traffic 110 associated with the voice call connection may determine the QoS class 108 for the traffic 110 (e.g., based on the application type - voice call - of the connection). The transmission component(s) 122 may then prioritize among the data packets constituting the traffic 110 based on the QoS class 108 associated with those data packets. In one example, data packets of a given QoS class 108 may be stored in a queue for that QoS class 108, and the transmission component(s) 122 may prioritize transmission over network resources based on queue. The transmission component(s) 122 may also monitor performance metrics, network configuration, or network fault information associated with communicating the traffic 110 and may report those performance metrics, network configuration, or network fault information to the SON device(s) 102.

In various implementations, the transmission component(s) 122 at a given node 112 may monitor and report on any sort of performance metrics, configuration, or fault information which may be indicative of the QoS being provided for traffic 110 associated with different QoS classes 108 at that given node 112. Example performance metrics may include at least one of throughput, delay, scheduling delay, queuing delay, jitter, packet loss, number of user, queue length, retransmission, utilization, usage, or latency. Example network configuration may include at least one of hardware configuration software configuration, parameter configuration, or capacity configuration. Example network fault information may include network alarms or warning. These performance metrics, network configuration, or network fault information, or any subset of them, may be gathered by the transmission component(s) 122 for traffic 110 on a per-QoS-class basis at the given node 112, so that there may be a set of performance metrics, network configuration, or network fault information for each QoS class 108 used by the given node 112, and reported to the SON device(s) 102. In some implementations, different performance metrics, network configuration, or network fault information may be gathered by the transmission component(s) 122 for different QoS classes 108, at different nodes 112, or both.

In addition to monitoring and reporting on performance metrics, network configuration, or network fault information, the transmission component(s) 122 of the nodes 112, may dynamically adjust QoS factors 106 associated with their QoS classes 108. These QoS factors 106 may be used along with the QoS classes 108 to adjust the priority given to traffic 110 of the different QoS classes 108. Examples of QoS factors 106 may include weights, delay budget, maximum bit rate, and minimum bit rate. For instance, traffic 110 associated with a QoS class 108 of '1' may be given a higher priority than traffic 110 with a QoS class 108 of '2', by the effect of that priority difference in allocating network resources may be affected by the QoS factors 106. The transmission component(s) 122 may receive indications of QoS factors 106 determined by the SON device(s) 102 from the SON device(s) 102 and may then update the QoS factors 106 based on the received indications. Those QoS factors 106 are then used by the transmission component(s) 122 in allocating network resources.

In some implementations, the transmission component(s) 122 may receive adjustments to the QoS class 108 associated with traffic 110 either in addition to or instead of the adjustments to the QoS factors 106. Responsive to receiving such adjustments to the QoS class 108 for a part of the traffic, the transmission component(s) 122 may reclassify that part of the traffic 110 with the adjusted QoS class 108.

In a first example, an access network node 112 may be experiencing heavy demand of its network resources. Many mobile devices may be connected to the access network node 112, and some of those mobile devices may be heavily utilizing cellular resource (e.g., by watching streaming video, etc.). The demand may exceed the available network resources of the access network node 112, causing delay or loss in the transmission of some packets. The transmission component(s) 122 of the access network node 112 may assign network resources based on QoS class 108, giving, for instance, higher priority to voice calls than to streaming movies. But even this may result in dropped calls if the QoS class 108 for voice calls is not given sufficient QoS factor. Thus, the transmission component(s) 122 report performance metrics, network configuration, or network fault information for the traffic 110 of the QoS classes 108 of the access network node 112 and receive indications of QoS factors 106 to use in return. The transmission component(s) 122 may then update the QoS factors 106 based on the indications, and the resulting QoS factors 106 may result in the QoS class 108 for the voice calls being given sufficient priority such that the voice calls are not dropped.

In a second example, an access network node 112 may be experiencing low demand of its network resources. It may, for instance, be late at night, with few real-time communications and streaming media sessions. There may be more than enough network resources for the demand. In allocating network resources, however, the transmission component(s) 122 may deprioritize traffic 110 of a lower priority QoS class 108, resulting in a poorer QoS being provided to that traffic 110 than need be under the conditions. To avoid this result, the transmission component(s) 122 report performance metrics, network configuration, or network fault information for the traffic 110 of the QoS classes 108 of the access network node 112 and receive indications of QoS factors 106 to use in return. The transmission component(s) 122 may then update the QoS factors 106 based on the indications, and the resulting QoS factors 106 may result in more equal treatment and better QoS across the board, for all traffic 110 of the access network node 112.

In various implements, the SON device(s) 102 may be associated with an operations support system (OSS) of the telecommunication network 114 or may be an application server or servers of the telecommunication network 114. The transmission component(s) 122 of the node(s) 112 may be configured to report performance metrics, network configuration, or network fault information to the SON device(s) 102 and to receive indications of QoS factors 106 from the SON device(s) 102. In some implementations, the consolidation engine 118 may be a SON component whose purpose to receive and store the performance metrics, network configuration, or network fault information in the performance metrics, network configuration, or network fault information store 116. The performance metrics, network configuration, or network fault information store 116 may be any sort of database, file, or data structure. Also, the performance metrics, network configuration, or network fault information store 116 may be associated with a schema, and the schema may be extended in response to the addition of new SON tools 104 or to the modification of a SON tool 104. In some implementations, the consolidation engine 118 may also filter out redundant or non-utilized performance metrics, network configuration, or network fault information.

The consolidation engine 118 may then automatically provide the performance metrics, network configuration, or network fault information from the performance metrics, network configuration, or network fault information store 116 to one or more of the SON tools 104 on, e.g., a periodic or event-driven basis. In some implementations, the consolidation engine 118 may pass performance metrics, network configuration, or network fault information to different ones of the SON tools 104 based on any or all of a type of node 112 associated with the performance metrics, network configuration, or network fault information, a QoS class associated with the performance metrics, network configuration, or network fault information, a time of day associated with the performance metrics, network configuration, or network fault information, various patterns or thresholds meeting the performance metrics, network configuration, or network fault information, etc. In other implementations, rather than automatically invoking SON tools 104, the consolidation engine 118 may be queried for performance metrics, network configuration, or network fault information by the SON tools 104.

In various implementations, the various SON components of the SON device(s) 102 may be connected by a SON API. The API may be an API for SONs that may be standardized and shared among multiple SONs. When standardized, the API may expose at least one of standardized methods/procedures or standardized parameters, such as the performance metrics, network configuration, or network fault information. In other implementations, the architecture utilizing the API may be standardized among multiple SONs, but the API may be specific to the SON device(s) 102. In addition, the API may include methods for providing data to or for receiving or retrieving data from any of the SON components 104, 116-120, and 124. In some implementations, the API may include methods for alerts or alarms that may be utilized by the SON tools 104 to receive notifications that, for example, a performance metric exceeds a threshold. Also, the API may be a separate SON component or may be methods/processes of other SON components, such as SON components 104, 116-120, and 124, and the API may simply be a logical representation.

Upon receiving or retrieving the performance metrics, network configuration, or network fault information through consolidation engine 118, the SON tool(s) 104 may determine QoS factors 106 for the QoS classes 108 of the nodes(s) 112 based on those performance metrics, network configuration, or network fault information. The SON tool(s) 104 may use or be configured in accordance with a policy of the telecommunication network operator providing different levels of QoS to different classes of traffic 110 in different circumstances. Each policy may comprise or be resolved to a model or rule set associated different QoS factors 106 or weigh-adjustments with different combinations of performance metrics, network configuration, or network fault information, node types, QoS class types, times of day, network conditions, or other sorts of parameters. Upon determining the QoS factors 106 or QoS factor adjustments, the SON tool(s) 104 may provide the QoS factors 106 or QoS factor adjustments to the parameter configurator 120, through, e.g., the SON API.

The SON tool(s) 104 may also each invoke a SON component to perform an action based on the performance metrics, network configuration, or network fault information, invoke an engineering tool based on the performance metrics, network configuration, or network fault information, pass information associated with the performance metrics, network configuration, or network fault information to a SON component, send a notification associated with the performance metrics, network configuration, or network fault information, or generate of a report based on the performance metrics, network configuration, or network fault information. A SON tool 104 may also be invoked by another SON tool 104, and those SON tools 104 may collaborate to determine the QoS factors 106.

In some implementations, the SON tool(s) 104 may comprise different tools 104 for different types of nodes 112, different tools 104 for different times of day, different tools 104 for different network conditions, etc. Alternatively, a single SON tool 104 or set of SON tools 104 may be used for multiple types of nodes 112, times of day, network conditions, etc. with policy and configuration specifying a same or different treatment in view of those differences. For example, the SON tool(s) 104 may determine different QoS factors 106 for different types of node(s) 112 even if performance metrics, network configuration, or network fault information are the same or similar. The SON tool(s) 104 may also determine different QoS factors 106 for different times of day or network conditions when performance metrics, network configuration, or network fault information are the same or similar. Alternatively, similar or same QoS factors 106 may be determined despite differences in type of node 112, time of day, network conditions, etc.

Further, the SON tool(s) 104 may be configured to monitor results of adjustments of QoS factors 106 and to modify its model or rule set based on the monitoring. Such feedback and refinement may utilize machine learning techniques. Alternatively or additionally, the SON tool(s) 104 may make smaller adjustments to the QoS factors 106, gradually increasing or decreasing them over a number of iterations of updates and performance metric reports. Such a gradual approach may improve functioning without introducing other additional performance issues.

Also, in some implementations, the SON tool(s) 104 may adjust the QoS class 108 for the traffic 110 associated with the performance metrics, network configuration, or network fault information. The SON tool(s) 104 may do this instead of or in addition to determining QoS factors 106. Such a QoS class adjustment may also be provided to the node(s) 112 through the parameter configurator 120.

In various implementations, the SON tool(s) 104 may be created or modified by a SON portal 124. The SON portal 124 may be a user-facing component for displaying information and enabling specification of SON tool(s) 104 by users (e.g., personnel of the telecommunication network operator). The SON portal 124 may offer a user interface for textual or graphical specification of a new SON tool 104 or for configuring/updating of an existing SON tool 104. Such a user interface may simply accept textually-specified code for a SON tool 104, or may even allow a user to select graphical representations of SON components (e.g., a graphical representation of the consolidation engine 118) to cause automatic specification of code for accessing the SON component.

As mentioned, upon determining the QoS factors 106 or QoS factor adjustments, the SON tool(s) 104 may provide the QoS factors 106 or QoS factor adjustments to the parameter configurator 120. Upon retrieving or receiving the QoS factors 106 or QoS factor adjustments, the parameter configurator 114 transmits indications of the QoS factors 106 or QoS factor adjustments to the node(s) 112.

### Example Devices

FIG. 2 illustrates a component level view of a computing device configured to implement one or more SON components. As illustrated, the computing device 200 comprises a system memory 202 storing one or more SON components 204 and other modules and data 206. Also, the computing device 200 includes processor(s) 208, a removable storage 210, a non-removable storage 212, transceivers 214, output device(s) 216, and input device(s) 218.

In various implementations, system memory 202 is volatile (such as RAM), non-volatile (such as ROM, flash memory, etc.) or some combination of the two. The SON component(s) 204 may be any one or more of the SON tools 104, the performance metrics, network configuration, or network fault information store 116, the consolidation engine 118, the parameter configurator 120, or the SON portal 124 described above in detail with regard to FIG. 1. The other modules or data 206 stored in the system memory 202 may comprise any sort of applications or platform components of the computing device 200, as well as data associated with such applications or platform components.

In some implementations, the processor(s) 208 is a central processing unit (CPU), a graphics processing unit (GPU), or both CPU and GPU, or any other sort of processing unit.

Non-transitory computer-readable media may include volatile and nonvolatile, removable and non-removable tangible, physical media implemented in technology for storage of information, such as computer readable instructions, data structures, program modules, or other data. System memory 202, removable storage 210 and non-removable storage 212 are all examples of non-transitory computer-readable media. Non-transitory computer-readable media include, but are not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other tangible, physical medium which can be used to store the desired information and which can be accessed by the computing device 200. Any such non-transitory computer-readable media may be part of the computing device 200.

In some implementations, the transceivers 214 include any sort of transceivers known in the art. For example, transceivers 214 may include a radio transceiver that performs the function of transmitting and receiving radio frequency communications via an antenna. The transceivers 214 may facilitate wireless connectivity between the computing device 200 and various nodes of the telecommunication network 114. In addition, the transceivers 214 may also include a wireless communication transceiver and a near field antenna for communicating over unlicensed wireless IP networks, such as local wireless data networks and personal area networks (e.g., Bluetooth or near field communication (NFC) networks). Further, the transceivers 214 may include wired communication components, such as an Ethernet port, that connect the computing device 200 in a wired fashion to one or more nodes of the telecommunication network 114.

In some implementations, the output devices 216 include any sort of output devices known in the art, such as a display (e.g., a liquid crystal display), speakers, a vibrating mechanism, or a tactile feedback mechanism. Output devices 216 also include ports for one or more peripheral devices, such as headphones, peripheral speakers, or a peripheral display.

In various implementations, input devices 218 include any sort of input devices known in the art. For example, input devices 218 may include a camera, a microphone, a keyboard/keypad, or a touch-sensitive display. A keyboard/keypad may be a push button numeric dialing pad (such as on a typical telecommunication device), a multi-key keyboard (such as a conventional QWERTY keyboard), or one or more other types of keys or buttons, and may also include a joystick-like controller and/or designated navigation buttons, or the like.

FIG. 3 illustrates a component level view of a node of the telecommunication network ("telecommunication network node"). The telecommunication network node may be any of an access network node, a backhaul node, or a core network node. As illustrated, the telecommunication network node 300 comprises a system memory 302 storing a scheduler/transmission component(s) 304, QoS class queues 306, and other modules and data 308. Also, the telecommunication network node 300 includes processor(s) 310, a removable storage 312, a non-removable storage 314, transceivers 316, output device(s) 318, and input device(s) 320.

In various implementations, system memory 302 is volatile (such as RAM), non-volatile (such as ROM, flash memory, etc.) or some combination of the two. The scheduler/transmission component(s) 304 may be any sort of scheduler/transmission components, such as the transmission component(s) 122 described above. The QoS class queues 306 may be queues for traffic 110, each QoS class queue 306 being associated with a QoS class 108. Such queues 306 may store traffic 110 while it awaits transmission. The other modules or data 308 stored in the system memory 302 may comprise any sort of applications or platform components of the telecommunication network node 300, as well as data associated with such applications or platform components.

In some implementations, the processor(s) 310 is a central processing unit (CPU), a graphics processing unit (GPU), or both CPU and GPU, or any other sort of processing unit.

Non-transitory computer-readable media may include volatile and nonvolatile, removable and non-removable tangible, physical media implemented in technology for storage of information, such as computer readable instructions, data structures, program modules, or other data. System memory 302, removable storage 312 and non-removable storage 314 are all examples of non-transitory computer-readable media. Non-transitory computer-readable media include, but are not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other tangible, physical medium which can be used to store the desired information and which can be accessed by the telecommunication network node 300. Any such non-transitory computer-readable media may be part of the telecommunication network node 300.

In some implementations, the transceivers 316 include any sort of transceivers known in the art. For example, transceivers 316 may include a radio transceiver that performs the function of transmitting and receiving radio frequency communications via an antenna. The transceivers 316 may facilitate wireless connectivity between the telecommunication network node 300 and various nodes or devices of the telecommunication network (e.g., SON device(s) 102 or nodes(s) 112). In addition, the transceivers 316 may also include a wireless communication transceiver and a near field antenna for communicating over unlicensed wireless IP networks, such as local wireless data networks and personal area networks (e.g., Bluetooth or near field communication (NFC) networks). Further, the transceivers 316 may include wired communication components, such as an Ethernet port, that connect the telecommunication network node 300 in a wired fashion to one or more nodes or devices of the telecommunication network.

In some implementations, the output devices 318 include any sort of output devices known in the art, such as a display (e.g., a liquid crystal display), speakers, a vibrating mechanism, or a tactile feedback mechanism. Output devices 318 also include ports for one or more peripheral devices, such as headphones, peripheral speakers, or a peripheral display.

In various implementations, input devices 320 include any sort of input devices known in the art. For example, input devices 320 may include a camera, a microphone, a keyboard/keypad, or a touch-sensitive display. A keyboard/keypad may be a push button numeric dialing pad (such as on a typical telecommunication device), a multi-key keyboard (such as a conventional QWERTY keyboard), or one or more other types of keys or buttons, and may also include a joystick-like controller and/or designated navigation buttons, or the like.

### Example Processes

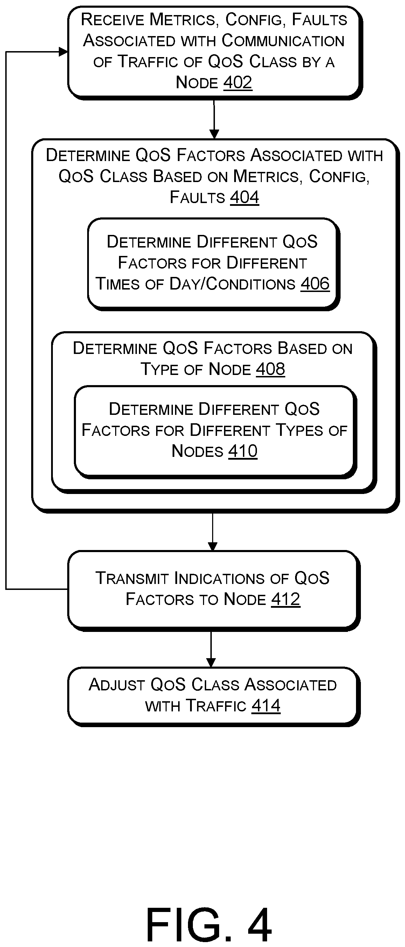

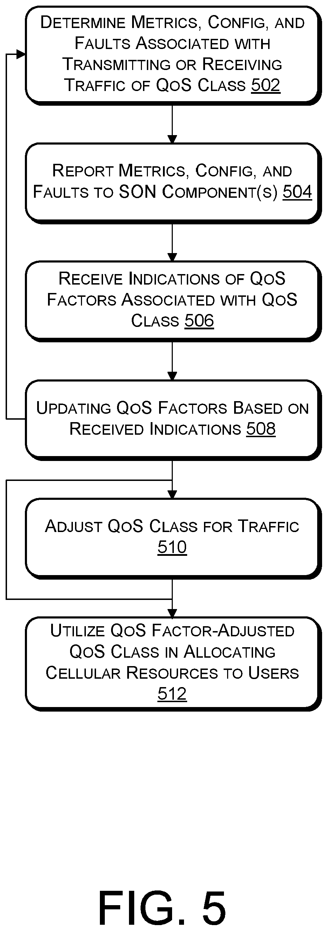

FIGs. 4 and 5 illustrate example processes. These processes are illustrated as logical flow graphs, each operation of which represents a sequence of operations that can be implemented in hardware, software, or a combination thereof. In the context of software, the operations represent computer-executable instructions stored on one or more computer-readable storage media that, when executed by one or more processors, perform the recited operations. Generally, computer-executable instructions include routines, programs, objects, components, data structures, and the like that perform particular functions or implement particular abstract data types. The order in which the operations are described is not intended to be construed as a limitation, and any number of the described operations can be combined in any order and/or in parallel to implement the processes.

FIG. 4 illustrates an example process for determining, by SON component(s), QoS factors for QoS classes of a telecommunication network node based on performance metrics, network configuration, or network fault information associated with communication of traffic of the QoS classes. The process includes, at 402, receiving, by one or more SON components, performance metrics, network configuration, or network fault information associated with communication of traffic of one or more QoS classes by a node of a telecommunication network. The QoS classes may be associated with different applications, different data types, or different service categories. Further, the node may be an access network node, a backhaul node, or a core network node. Also, the performance metrics, network configuration, or network fault information may include at least one of throughput, delay, scheduling delay, queuing delay, jitter, packet loss, number of user, or latency. In some examples, the performance metrics, network configuration, or network fault information are specific to traffic for a specific QoS class. In further examples, the performance metrics, network configuration, or network fault information include multiple sets of metrics correspondingly associated with traffic of multiple QoS classes.

At 404, the SON component(s) determine QoS factors associated with the one or more QoS classes based at least in part on the performance metrics, network configuration, or network fault information. At 406, the determining comprises determining different QoS factors for different times of day or different network conditions. At 408, the determining comprises determining the QoS factors based on a type of the node. At 410, determining the QoS factors based on a type of the node includes determining different QoS factors for different types of nodes.

At 412, the SON component(s) transmit indications of the QoS factors to the node of the telecommunication network.

In some implementations, the SON component(s) may repeatedly perform the receiving at 402, the determining at 404, and the transmitting at 412 to incrementally adjust the QoS factors (e.g., gradually increase weights).

At 414, the SON component(s) may adjust the QoS class associated with the traffic.

FIG. 5 illustrates an example process for reporting, by a telecommunication network node, performance metrics, network configuration, or network fault information associated with communication of traffic of the QoS classes, receiving indications of QoS factors for the QoS classes, and updating the QoS factors based on the received indications. The example process includes, at 502, determining, by a node of a telecommunication network, performance metrics, network configuration, or network fault information associated with transmitting or receiving traffic of one or more QoS classes. The performance metrics, network configuration, or network fault information may include at least one of throughput, delay, scheduling delay, queuing delay, jitter, packet loss, number of user, or latency. The QoS classes may be associated with different applications, different data types, or different service categories.

At 504, the node may report the performance metrics, network configuration, or network fault information to one or more SON components of the telecommunication network.

At 506, the node may receive indications of QoS factors associated with the one or more QoS classes.

At 508, the node may update the QoS factors associated with the one or more QoS classes based on the received indications.

In some implementations, the node may repeatedly perform the determining at 502, the reporting at 504, the receiving at 506, and the updating at 508 to incrementally adjust the QoS factors

At 510, the node may also or instead the QoS class associated with the traffic (based, e.g., on instructions from SON component(s)).

At 512, the node may utilize QoS factored QoS classes in allocating network resources to users.

### CONCLUSION

Although the subject matter has been described in language specific to structural features and/or methodological acts, it is to be understood that the subject matter defined in the appended claims is not necessarily limited to the specific features or acts described. Rather, the specific features and acts are disclosed as exemplary forms of implementing the appended claims which define the scope of protection of the invention.

## Claims

1. A computer-implemented method:
receiving, by one or more self-organizing network, SON, components (102), performance metrics, network configuration, or network fault information associated with communication of traffic of one or more quality-of-service, QoS, classes (108) by a node (112) of a telecommunication network (114);
determining, by the one or more SON components, updated QoS factors (106) associated with the one or more QoS classes (108) based at least in part on the performance metrics, network configuration, or network fault information, the updated QoS factors being maximum or minimum bit rates associated with specific ones of the one or more QoS classes; and
transmitting, by the one or more SON components (102), indications of the updated QoS factors to the node (112) of the telecommunication network (114),
wherein the indications of the updated QoS factors instruct the node (112) to adjust, based on the updated QoS factors, prioritized allocation of network resources for traffic (110) of different QoS classes,
wherein the one or more QoS classes (108) are associated with different applications, different data types, or different service categories,
wherein the performance metrics, network configuration, or network fault information include at least one of throughput, delay, scheduling delay, queuing delay, jitter, packet loss, number of user, or latency, and
wherein the node is an access network node, a backhaul node, or a core network node.

2. The computer-implemented method of claim 1, wherein the determining comprises determining different updated QoS factors for different times of day or different network conditions.

3. The computer-implemented method of claim 1, wherein the performance metrics, network configuration, or network fault information are specific to traffic for a specific QoS class.

4. The computer-implemented method of claim 1, wherein the performance metrics, network configuration, or network fault information include multiple sets of metrics correspondingly associated with traffic of multiple QoS classes.

5. The computer-implemented method of claim 1, wherein the determining includes determining the updated QoS factors based on a type of the node.

6. The computer-implemented method of claim 5, wherein the determining the updated QoS factors based on the type of the node comprises determining different updated QoS factors for different types of nodes.

7. The computer-implemented method of claim 1, further comprising adjusting the QoS class associated with the traffic.

8. The computer-implemented method of claim 1, further comprising repeatedly performing the receiving, the determining, and the transmitting to incrementally change how the node allocates network resources for traffic of differently ones of the plurality of QoS classes based on incrementally different updated QoS factors.

9. A non-transitory computer-readable medium having a plurality of programming instructions stored thereon which, when executed by a node (112) of a telecommunication network (114), cause the node to perform operations comprising:
prioritizing allocation of network resources for traffic (110) of a plurality of quality-of-service, QoS, classes (108) based on QoS factors associated with the plurality of QoS classes;
determining performance metrics, network configuration, or network fault information associated with transmitting or receiving traffic of the plurality of QoS classes;
reporting the performance metrics, network configuration, or network fault information to one or more self-organizing network, SON, components of the telecommunication network;
receiving, from the SON components (104), indications of updated QoS factors associated with the plurality of QoS classes, the updated QoS factors being maximum or minimum bit rates associated with specific ones of the plurality of QoS classes; and
dynamically updating the QoS factors associated with the plurality of QoS classes to match the updated QoS factors based on the received indications, wherein updating the QoS factors to match the updated QoS factors adjusts prioritized allocation of network resources for traffic of different ones of the plurality of QoS classes,
wherein the plurality of QoS classes are associated with different applications, different data types, or different service categories, and
wherein the performance metrics, network configuration, or network fault information include at least one of throughput, delay, scheduling delay, queuing delay, jitter, packet loss, number of user, or latency.

10. The non-transitory computer-readable medium of claim 9, wherein the operations further comprise repeated performing the determining, the reporting, the receiving, and the dynamically updating to incrementally change how the node allocates the network resources for traffic of different ones of the plurality of QoS classes based on incrementally different updated QoS factors.

11. The non-transitory computer-readable medium of claim 9, wherein the operations further comprise adjusting the QoS class associated with the traffic.

12. A system comprising:
one or more processors;
a consolidation engine (118) configured to be operated by the one or more processors to receive performance metrics, network configuration, or network fault information associated with transmission of traffic of individual ones of a plurality of quality-of-service, QoS, classes by one or more nodes of a telecommunication network;
a self-organizing network, SON, tool (104) configured to be operated by the one or more processors to determine updated QoS factors associated with the plurality of QoS classes based at least in part on the performance metrics, network configuration, or network fault information, the updated QoS factors being maximum or minimum bit rates associated with specific ones of the plurality of QoS classes; and
a parameter configurator configured to be operated by the one or more processors to transmit indications of the updated QoS factors to the nodes of the telecommunication network,
wherein the indications of the updated QoS factors instruct the one or more nodes to adjust, based on the updated QoS factors, prioritized allocations of network resources for traffic of different ones of the plurality of QoS classes.

13. The system of claim 12, further comprising a SON portal (124) to enable configuration of the SON tool.

14. The system of claim 12, wherein the SON tool comprises multiple SON tools for corresponding multiple types of nodes.

## Patentansprüche

1. Computerimplementiertes Verfahren:
Empfangen, durch eine oder mehrere selbstorganisierende Netzwerk-, SON, -Komponenten (102), von Leistungskennzahlen, einer Netzwerkkonfiguration oder Netzwerkfehlerinformationen, die der Kommunikation von Verkehr von einer oder mehreren Dienstqualitäts-, QoS, - Klassen (108) von einem Knoten (112) eines Telekommunikationsnetzwerks (114) zugeordnet sind;
Ermitteln, durch die eine oder die mehreren SON-Komponenten, von aktualisierten QoS-Faktoren (106), die der einen oder den mehreren QoS-Klassen (108) zugeordnet sind, basierend mindestens teilweise auf den Leistungskennzahlen, der Netzwerkkonfiguration oder Netzwerkfehlerinformationen, wobei die aktualisierten QoS-Faktoren maximale oder minimale Bitraten sind, die spezifischen der einen oder der mehreren QoS-Klassen zugeordnet sind; und
Senden, durch die eine oder die mehreren SON-Komponenten (102), von Angaben über die aktualisierten QoS-Faktoren an den Knoten (112) des Telekommunikationsnetzwerks (114),
wobei die Angaben über die aktualisierten QoS-Faktoren den Knoten (112) anweisen, basierend auf den aktualisierten QoS-Faktoren, eine priorisierte Zuweisung von Netzwerkressourcen für den Verkehr (110) verschiedener QoS-Klassen anzupassen,
wobei die eine oder die mehreren QoS-Klassen (108) unterschiedlichen Anwendungen, unterschiedlichen Datentypen oder unterschiedlichen Dienstkategorien zugeordnet sind,
wobei die Leistungskennzahlen, die Netzwerkkonfiguration oder die Netzwerkfehlerinformationen mindestens eines aus Durchsatz, Verzögerung, Zeitplanungsverzögerung, Warteschlangenverzögerung, Jitter, Paketverlust, Benutzeranzahl oder Latenzzeit beinhalten und
wobei der Knoten ein Zugangsnetzwerkknoten, ein Backhaul-Knoten oder ein Kernnetzwerkknoten ist.

2. Computerimplementiertes Verfahren nach Anspruch 1, wobei das Ermitteln das Ermitteln verschiedener aktualisierter QoS-Faktoren für verschiedene Uhrzeiten oder verschiedene Netzwerkbedingungen umfasst.

3. Computerimplementiertes Verfahren nach Anspruch 1, wobei die Leistungskennzahlen, die Netzwerkkonfiguration oder die Netzwerkfehlerinformationen spezifisch für den Verkehr für eine spezifische QoS-Klasse sind.

4. Computerimplementiertes Verfahren nach Anspruch 1, wobei die Leistungskennzahlen, die Netzwerkkonfiguration oder die Netzwerkfehlerinformationen mehrere Gruppen von Kennzahlen beinhalten, die entsprechend dem Verkehr mehrerer QoS-Klassen zugeordnet sind.

5. Computerimplementiertes Verfahren nach Anspruch 1, wobei das Ermitteln das Ermitteln der aktualisierten QoS-Faktoren basierend auf einem Typ des Knotens beinhaltet.

6. Computerimplementiertes Verfahren nach Anspruch 5, wobei das Ermitteln der aktualisierten QoS-Faktoren basierend auf dem Typ des Knotens das Ermitteln verschiedener aktualisierter QoS-Faktoren für verschiedene Typen von Knoten umfasst.

7. Computerimplementiertes Verfahren nach Anspruch 1, ferner umfassend das Anpassen der QoS-Klasse, die dem Verkehr zugeordnet ist.

8. Computerimplementiertes Verfahren nach Anspruch 1, ferner umfassend das wiederholte Durchführen des Empfangens, des Ermittelns und des Sendens, um schrittweise zu verändern, wie der Knoten Netzwerkressourcen für Verkehr von unterschiedlichen aus der Vielzahl von QoS-Klassen basierend auf schrittweise unterschiedlichen aktualisierten QoS-Faktoren zuordnet.

9. Nichtflüchtiges, computerlesbares Medium, das eine Vielzahl von darauf gespeicherten Programmierungsanweisungen aufweist, die bei Ausführung durch einen Knoten (112) eines Telekommunikationsnetzwerks (114) bewirken, dass der Knoten Operationen ausführt, umfassend:
Priorisierung der Zuordnung von Netzwerkressourcen für den Verkehr (110) von einer Vielzahl von Dienstqualitäts-, QoS, -Klassen (108) basierend auf QoS-Faktoren, die der Vielzahl von QoS-Klassen zugeordnet sind;
Ermitteln von Leistungskennzahlen, einer Netzwerkkonfiguration, oder Netzwerkfehlerinformationen, die dem Senden oder Empfangen von Verkehr von der Vielzahl von QoS-Klassen zugeordnet sind;
Berichten der Leistungskennzahlen, der Netzwerkkonfiguration oder der Netzwerkfehlerinformationen an eine oder mehrere selbstorganisierenden Netzwerk-, SON, -Komponenten des Telekommunikationsnetzwerks;
Empfangen von Angaben über aktualisierte QoS-Faktoren, die der Vielzahl von QoS-Klassen zugeordnet sind, von den SON-Komponenten (104), wobei die aktualisierten QoS-Faktoren maximale oder minimale Bitraten sind, die spezifischen aus der Vielzahl von QoS-Klassen zugeordnet sind; und
dynamisches Aktualisieren der QoS-Faktoren, die der Vielzahl von QoS-Klassen zugeordnet sind, um mit den aktualisierten QoS-Faktoren basierend auf den empfangenen Angaben übereinzustimmen, wobei das Aktualisieren der QoS-Faktoren, um mit den QoS-Faktoren übereinzustimmen, eine priorisierte Zuordnung von Netzwerkressourcen für den Verkehr von unterschiedlichen aus der Vielzahl von QoS-Klassen anpasst,
wobei die Vielzahl von QoS-Klassen unterschiedlichen Anwendungen, unterschiedlichen Datentypen oder unterschiedlichen Dienstkategorien zugeordnet ist und
wobei die Leistungskennzahlen, die Netzwerkkonfiguration oder die Netzwerkfehlerinformationen mindestens eines aus Durchsatz, Verzögerung, Zeitplanungsverzögerung, Warteschlangenverzögerung, Jitter, Paketverlust, Benutzeranzahl oder Latenzzeit beinhalten.

10. Nichtflüchtiges, computerlesbares Medium nach Anspruch 9, wobei die Operationen ferner das wiederholte Durchführen des Ermittelns, des Berichtens, des Empfangens und des dynamischen Aktualisierens umfassen, um schrittweise zu verändern, wie der Knoten die Netzwerkressourcen für Verkehr von unterschiedlichen aus der Vielzahl von QoS-Klassen basierend auf schrittweise unterschiedlichen aktualisierten QoS-Faktoren zuordnet.

11. Nichtflüchtiges, computerlesbares Medium nach Anspruch 9, wobei die Operationen ferner das Anpassen der QoS-Klasse, die dem Verkehr zugeordnet ist, umfassen.

12. System, umfassend:
einen oder mehrere Prozessoren;
ein Konsolidierungsmodul (118), das konfiguriert ist, um von dem einen oder den mehreren Prozessoren betrieben zu werden, um Leistungskennzahlen, eine Netzwerkkonfiguration oder Netzwerkfehlerinformationen zu empfangen, die dem Senden von Verkehr einzelner aus einer Vielzahl von Dienstqualitäts-, QoS, -Klassen von einem oder mehreren Knoten eines Telekommunikationsnetzwerks zugeordnet sind;
ein selbstorganisierendes Netzwerk-, SON, -Werkzeug (104), das konfiguriert ist, um von dem einen oder den mehreren Prozessoren betrieben zu werden, um aktualisierte QoS-Faktoren zu ermitteln, die der Vielzahl von QoS-Klassen zugeordnet sind, basierend mindestens teilweise auf den Leistungskennzahlen, der Netzwerkkonfiguration oder den Netzwerkfehlerinformationen, wobei die aktualisierten QoS-Faktoren maximale oder minimale Bitraten sind, die spezifischen aus der Vielzahl von QoS-Klassen zugeordnet sind; und
einen Parameterkonfigurator, der konfiguriert ist, um von dem einen oder den mehreren Prozessoren betrieben zu werden, um Angaben über die aktualisierten QoS-Faktoren an die Knoten des Telekommunikationsnetzwerks zu senden,
wobei die Angaben über die aktualisierten QoS-Faktoren den einen oder die mehreren Knoten anweisen, basierend auf den aktualisierten QoS-Faktoren priorisierte Zuordnungen von Netzwerkressourcen für den Verkehr verschiedener aus der Vielzahl von QoS-Klassen anzupassen.

13. System nach Anspruch 12, ferner umfassend ein SON-Portal (124), um die Konfiguration des SON-Werkzeugs zu aktivieren.

14. System nach Anspruch 12, wobei das SON-Werkzeug mehrere SON-Werkzeuge für entsprechende mehrere Typen von Knoten umfasst.

## Revendications

1. Procédé mis en oeuvre par ordinateur comprenant :
recevoir, par un ou plusieurs composants de réseau à auto-organisation, SON, (102), des informations de mesures de performances, de configuration de réseau ou de défaillance de réseau associées à une communication de trafic d'une ou plusieurs classes de qualité de service, QoS, (108) par un noeud (112) d'un réseau de télécommunication (114) ;
déterminer, par le ou les composants SON, des facteurs de QoS mis à jour (106) associés à la ou aux classes de QoS (108) sur la base, au moins en partie, des informations de mesures de performances, de configuration de réseau ou de défaillance de réseau, les facteurs de QoS mis à jour étant des débits binaires maximaux ou minimaux associés à des classes de QoS spécifiques parmi la ou les classes de QoS ; et
transmettre, par le ou les composants SON (102), des indications des facteurs de QoS mis à jour au noeud (112) du réseau de télécommunication (114),
dans lequel les indications des facteurs de QoS mis à jour donnent l'instruction au noeud (112) de régler, sur la base des facteurs de QoS mis à jour, une affectation priorisée de ressources de réseau pour le trafic (110) de différentes classes de QoS,
dans lequel la ou les classes de QoS (108) sont associées à différentes applications, à différents types de données ou à différentes catégories de services,
dans lequel les informations de mesures de performances, de configuration de réseau ou de défaillance de réseau comprennent au moins l'un parmi : un débit, un retard, un retard de planification, un retard de mise en file d'attente, une gigue, une perte de paquet, un numéro d'utilisateur ou une latence, et
dans lequel le noeud est un noeud de réseau d'accès, un noeud de liaison terrestre ou un noeud de réseau central.

2. Procédé mis en oeuvre par ordinateur selon la revendication 1, dans lequel la détermination comprend la détermination de différents facteurs de QoS mis à jour pour différentes heures du jour ou différentes conditions de réseau.

3. Procédé mis en oeuvre par ordinateur selon la revendication 1, dans lequel les informations de mesures de performances, de configuration de réseau ou de défaillance de réseau sont spécifiques à un trafic pour une classe de QoS spécifique.

4. Procédé mis en oeuvre par ordinateur selon la revendication 1, dans lequel les informations de mesures de performances, de configuration de réseau ou de défaillance de réseau comprennent de multiples ensembles de mesures associées de manière correspondante à un trafic de multiples classes de QoS.

5. Procédé mis en oeuvre par ordinateur selon la revendication 1, dans lequel la détermination comprend la détermination des facteurs de QoS mis à jour sur la base d'un type du noeud.

6. Procédé mis en oeuvre par ordinateur selon la revendication 5, dans lequel la détermination des facteurs de QoS mis à jour sur la base du type du noeud comprend la détermination de différents facteurs de QoS mis à jour pour différents types de noeuds.

7. Procédé mis en oeuvre par ordinateur selon la revendication 1, comprenant en outre le réglage de la classe de QoS associée au trafic.

8. Procédé mis en oeuvre par ordinateur selon la revendication 1, comprenant en outre : réaliser de façon répétée la réception, la détermination et la transmission pour changer de façon incrémentale la façon dont le noeud affecte des ressources de réseau pour le trafic de différentes classes de QoS parmi la pluralité de classes de QoS sur la base de facteurs de QoS mise à jour différents de façon incrémentale.

9. Support lisible par ordinateur non transitoire ayant une pluralité d'instructions de programmation stockées sur celui-ci qui, lorsqu'elles sont exécutées par un noeud (112) d'un réseau de télécommunication (114), amènent le noeud à réaliser des opérations comprenant :
prioriser l'affectation de ressources de réseau pour le trafic (110) d'une pluralité de classes de qualité de service, QoS, (108) sur la base de facteurs de QoS associés à la pluralité de classes de QoS ;
déterminer des informations de mesures de performances, de configuration de réseau ou de défaillance de réseau associées à la transmission ou à la réception du trafic de la pluralité de classes de QoS ;
rapporter les informations de mesures de performances, de configuration de réseau ou de défaillance de réseau à un ou plusieurs composants de réseau à auto-organisation, SON, du réseau de télécommunication ;
recevoir, en provenance des composants SON (104), des indications de facteurs de QoS mis à jour associés à la pluralité de classes de QoS, les facteurs de QoS mis à jour étant des débits binaires maximaux ou minimaux associés à des classes de QoS spécifiques parmi la pluralité de classes de QoS ; et
mettre à jour de façon dynamique les facteurs de QoS associés à la pluralité de classes de QoS pour mettre en correspondance les facteurs de QoS mis à jour sur la base des indications reçues, la mise à jour des facteurs de QoS pour mettre correspondance les facteurs de QoS mis à jour réglant une affectation priorisée de ressources de réseau pour le trafic de différentes classes de QoS parmi la pluralité de classes de QoS,
dans lequel la pluralité de classes de QoS sont associées à différentes applications, à différents types de données ou à différentes catégories de services, et
dans lequel les informations de mesures de performances, de configuration de réseau ou de défaillance de réseau comprennent au moins l'un parmi un débit, un retard, un retard de planification, un retard de mise en file d'attente, une gigue, une perte de paquet, un numéro d'utilisateur ou une latence.

10. Support lisible par ordinateur non transitoire selon la revendication 9, dans lequel les opérations comprennent en outre la réalisation de façon répétée de la détermination, du rapport, de la réception et de la mise à jour de façon dynamique pour changer de façon incrémentale la façon dont le noeud affecte les ressources de réseau pour le trafic de différentes classes de QoS parmi la pluralité de classes de QoS sur la base de facteurs de QoS mis à jour différents de façon incrémentale.

11. Support lisible par ordinateur non transitoire selon la revendication 9, dans lequel les opérations comprennent en outre le réglage de la classe de QoS associée au trafic.

12. Système comprenant :
un ou plusieurs processeurs ;
un moteur de consolidation (118) configuré pour être commandé par le ou les processeurs pour recevoir des informations de mesures de performances, de configuration de réseau ou de défaillance de réseau associées à une transmission de trafic de classes de qualité de service, QoS, individuelles parmi une pluralité de classes de qualité de service, QoS, par un ou plusieurs noeuds d'un réseau de télécommunication ;
un outil de réseau à auto-organisation, SON, (104) configuré pour être commandé par le ou les processeurs pour déterminer des facteurs de QoS mis à jour associés à la pluralité de classes de QoS sur la base, au moins en partie, des informations de mesures de performances, de configuration de réseau ou de défaillance de réseau, les facteurs de QoS mis à jour étant des débits binaires maximaux ou minimaux associés à des classes de QoS spécifiques parmi la pluralité de classes de QoS ; et
un configurateur de paramètre configuré pour être commandé par le ou les processeurs pour transmettre des indications des facteurs de QoS mis à jour aux noeuds du réseau de télécommunication,
dans lequel les indications des facteurs de QoS mis à jour donnent l'instruction au ou aux noeuds de régler, sur la base des facteurs de QoS mis à jour, des affectations priorisées de ressources de réseau pour le trafic de différentes classes de QoS parmi la pluralité de classes de QoS.

13. Système selon la revendication 12, comprenant en outre un portail SON (124) pour permettre une configuration de l'outil SON.

14. Système selon la revendication 12, dans lequel l'outil SON comprend de multiples outils SON pour de multiples types de noeuds correspondants.
